# EUROPEAN PATENT APPLICATION

(11) **EP 4 730 452 A1**
(43) Date of publication of application: **22.04.2026**
(21) Application number: 23941950.0
(22) Date of filing: 21.06.2023
(51) Int. Cl.: H01M 10/04, H01M 10/615

(54) **HEATING SYSTEM FOR BATTERY MODULE, HEATING EQUIPMENT FOR BATTERY MODULE, AND HEATING METHOD FOR BATTERY MODULE**

(71) Applicant: Contemporary Amperex Technology Co., Limited, Ningde, Fujian 352100 (CN)
(72) Inventor: DUAN, Minmin, Ningde, Fujian 352100 (CN); JING, Zhiyong, Ningde, Fujian 352100 (CN); WANG, Jifeng, Ningde, Fujian 352100 (CN)
(74) Representative: Ziebig Hengelhaupt Intellectual Property Attorneys Patentanwaltskanzlei PartGmbB
(86) International application number: PCT/CN2023/101825
(87) International publication number: WO 2024/259659

(57) **Abstract**

The present disclosure provides a heating system for a battery module, heating equipment for a battery module, and a heating method for a battery module. The heating system for the battery module includes: a heating device (1) configured to heat the battery module; a temperature detection portion (2) including a first temperature detection component (21) configured to detect a temperature of the heating device (1); a circuit control component (4) including a power adjustment device (41) that is provided in a power supply circuit (3) electrically connected to the heating component (1) and that adjusts a heating power of the heating device (1); and a temperature control device (5) signal-connected to both the first temperature detection component (21) and the power adjustment device (41) and configured to: based on a difference between the temperature detected by the first temperature detection component (21) and a predetermined temperature, adjust the heating power of the heating device (1) through the circuit control component (4) to adjust the temperature of the heating device (1) toward the predetermined temperature.

## Description

### TECHNICAL FIELD

The present disclosure relates to the field of battery technologies, and in particular, to a heating system for a battery module, heating equipment for a battery module, and a heating method for a battery module.

### BACKGROUND

**In** the production process of power battery modules, a module heating process is required. The module heating process plays a decisive role in the curing of colloids inside modules.

### SUMMARY

The present disclosure provides a heating system for a battery module, heating equipment for a battery module, and a heating method for a battery module that can precisely control the heating temperature.

The present disclosure provides a heating system for a battery module, where the heating system includes:
a heating device configured to heat the battery module;
a temperature detection portion including a first temperature detection component configured to detect a temperature of the heating device;
a circuit control component including a power adjustment device that is provided in a power supply circuit electrically connected to the heating component and that adjusts a heating power of the heating device; and
a temperature control device signal-connected to both the first temperature detection component and the power adjustment device and configured to:
   based on a difference between the temperature detected by the first temperature detection component and a predetermined temperature, adjust the heating power of the heating device through the circuit control component to adjust the temperature of the heating device toward the predetermined temperature.

In some embodiments,
the temperature detection portion further includes a second temperature detection component that detects a temperature at a different position of the heating device from the first temperature detection component;
the circuit control component further includes a first switch component provided in the power supply circuit and connected in series with the power adjustment device and the heating device; and
the temperature control device is signal-connected to both the second temperature detection component and the first switch component and configured to: in response to a difference between the temperatures detected by the first temperature detection component and the second temperature detection component being greater than a predetermined difference, control the first switch component to cut off the power supply circuit.

In some embodiments, the temperature control device includes:
a first temperature controller signal-connected to both the first temperature detection component and the power adjustment device and configured to adjust the heating power of the heating device through the power adjustment component based on a difference between the temperature detected by the first temperature detection component and the predetermined temperature; and
a second temperature controller signal-connected to the second temperature detection component, the first switch component, and the first temperature controller, where the second temperature controller is configured to: in response to the difference between the temperatures detected by the first temperature detection component and the second temperature detection component being greater than the predetermined difference, control the second switch component to cut off the power supply circuit.

In some embodiments, the first temperature controller includes a PID controller.

In some embodiments, the power adjustment device includes one of a second switch component, a voltage regulator, and a frequency regulator.

In some embodiments,
the temperature detection portion further includes a third temperature detection component that detects a temperature of an electric heating element of the heating device;
the circuit control component includes a third switch component, where the third switch component is provided in the power supply circuit and connected in series with the heating device; and
the temperature control device is signal-connected to both the third switch component and the third temperature detection component and configured to: in response to the temperature detected by the third temperature detection component reaching a limit temperature, control the third switch component to cut off the power supply circuit.

In some embodiments, the temperature control device includes a third temperature controller, and the third temperature controller is signal-connected to both the third switch component and the third temperature detection component and configured to: in response to the temperature detected by the third temperature detection component reaching the limit temperature, control the third switch component to cut off the power supply circuit.

In some embodiments, the heating system for the battery module further includes:
a current detection component provided in the power supply circuit to detect a current in the power supply circuit; and
a main control device, where the current detection component is signal-connected to the main control device, and the main control device is configured to issue alarm information in response to the current detected by the current component exceeding a predetermined range.

In some embodiments, the heating system for the battery module further includes a main control device, where the main control device is signal-connected to both the first temperature controller and the second temperature controller.

In some embodiments, further including a human-machine interaction device signal-connected to the temperature control device, where the human-machine interaction device is provided with a first input portion for a user to input the predetermined temperature.

In some embodiments, the human-machine interaction device is provided with a plurality of first input portions, the plurality of the first input portions are configured for a user to input a plurality of predetermined temperatures from low to high, and the temperature control device is configured to control the heating device to sequentially heat to the predetermined temperatures input by the plurality of first input portions.

In some embodiments, the human-machine interaction device includes a plurality of second input portions provided in one-to-one correspondence with the first input portions, the second input portion is configured for a user to input a predetermined time for maintaining the predetermined temperature input by the corresponding first input portion, and the temperature control device is configured to control the heating device to maintain the corresponding predetermined time at the predetermined temperature.

In some embodiments, the heating device includes a plate-shaped component and electric heating elements uniformly arranged in the plate-shaped component, and the electric heating elements are electrically connected to the power supply circuit.

The present disclosure also provides heating equipment for a battery module, and the heating equipment includes:
a placement device configured to carry the battery module; and
the heating system for the battery module described above, where the heating device is mounted on the placement device.

In some embodiments, the placement device includes two clamping components spaced apart, and the heating device is provided on the clamping components.

In some embodiments, the heating equipment includes:
a plurality of heating chambers, where each heating chamber includes at least one placement device;
a plurality of sub-distribution cabinets provided in one-to-one correspondence with the plurality of heating chambers, where the sub-distribution cabinets is provided with the temperature control device, and the temperature control device is configured to control the temperature of the heating device in the corresponding heating chamber; and
a main distribution cabinet provided with a main control device, where the main control device is signal-connected to the temperature control devices in the plurality of sub-distribution cabinets.

The present disclosure also provides a heating method for a battery module, and the heating method includes:
acquiring temperature information of a heating device for heating the battery module; and
based on a difference between a temperature of the heating device and a predetermined temperature, issuing a command to adjust a heating power of the heating device to adjust the temperature of the heating device toward the predetermined temperature.

In some embodiments, the heating method further includes:
acquiring a temperature of a first position of the heating device and temperature information of a second position different from the first position; and
in response to a difference between the temperature of the first position and the temperature of the second position being greater than a predetermined difference, issuing a command to cut off a power supply circuit that supplies electric energy to the heating device.

In some embodiments, the heating method further includes:
acquiring temperature information of an electric heating element of the heating device; and
in response to the temperature of the electric heating element being greater than a limit temperature, issuing a command to cut off a power supply circuit that supplies electric energy to the heating device.

In some embodiments, the heating method further includes:
acquiring a plurality of predetermined temperatures from low to high input by a user; and
issuing a command to adjust the heating power of the heating device to sequentially heat the temperature of the heating device to the plurality of predetermined temperatures, where a maximum of the predetermined temperatures is a target temperature.

In some embodiments, the heating method further includes:
acquiring a plurality of predetermined times input by a user and corresponding to the plurality of predetermined temperatures respectively; and
issuing a command to adjust the heating power of the heating device to maintain the heating device at the predetermined temperature for the predetermined time.

In some embodiments, a control deviation is formed based on a difference between the predetermined temperature and an actual temperature of the heating device 1, and the deviation is linearly combined through proportion, integration, and differentiation to form a control quantity to control the heating power of the heating device.

In the disclosed technical solution, the temperature control device adjusts the heating power of the heating device based on the difference between the temperature of the heating device detected by the first temperature detection component and the predetermined temperature, which is beneficial to improving the stability and accuracy of the temperature of the heating device, thereby ensuring the stability of the battery module to improve the quality of glue curing in the battery module.

### BRIEF DESCRIPTION OF DRAWINGS

In order to more clearly illustrate the technical solutions of the embodiments of the present disclosure, the drawings required to be used in the embodiments of the present disclosure will be briefly introduced below. Obviously, the drawings described below are merely some embodiments of the present disclosure. For those of ordinary skill in the art, other drawings can be obtained based on these drawings without creative efforts.
FIG. 1 is a schematic structural diagram of a vehicle disclosed in an embodiment of the present disclosure;
FIG. 2 is an exploded schematic structural diagram of a battery pack disclosed in an embodiment of the present disclosure;
FIG. 3 is a system block diagram of a heating system for a battery module disclosed in an embodiment of the present disclosure;
FIG. 4 is a partial circuit diagram of a heating system for a battery module disclosed in an embodiment of the present disclosure;
FIG. 5 is a schematic structural diagram of a heating device of a heating system for a battery module disclosed in an embodiment of the present disclosure;
FIG. 6 is a schematic diagram of an interface of a human-machine interaction device of a heating system for a battery module disclosed in an embodiment of the present disclosure;
FIG. 7 is a schematic structural diagram of heating equipment for a battery module disclosed in an embodiment of the present disclosure;
FIG. 8 is a schematic structural diagram of a battery module placement device of heating equipment for a battery module disclosed in an embodiment of the present disclosure;
FIG. 9 is a partial schematic structural diagram of a battery module placement device of heating equipment for a battery module disclosed in an embodiment of the present disclosure;
FIG. 10 is an electrical layout diagram of heating equipment for a battery module disclosed in an embodiment of the present disclosure; and
FIG. 11 is a control flowchart of a heating system for a battery module disclosed in an embodiment of the present disclosure.

### DESCRIPTION OF EMBODIMENTS

The embodiments of the present disclosure will be further described in detail below in conjunction with the drawings and embodiments. The detailed description and drawings of the following embodiments are used to exemplarily illustrate the principles of the present disclosure, but cannot be used to limit the scope of the present disclosure, that is, the present disclosure is not limited to the described embodiments.

In the description of the present disclosure, it should be noted that, unless otherwise stated, "plurality" means two or more. The orientation or positional relationships indicated by the terms "upper", "lower", "left", "right", "inner", "outer", and the like, are only for the convenience of describing the present disclosure and simplifying the description, and do not indicate or imply that the referred device or element must have a specific orientation, or be constructed and operated in a specific orientation, and therefore cannot be understood as a limitation on the present disclosure. In addition, the terms "first", "second", "third", and the like are only used for descriptive purposes and cannot be understood as indicating or implying relative importance. "Vertical" is not strictly vertical, but within the allowable range of error. "Parallel" is not strictly parallel, but within the allowable range of error.

The orientation words appearing in the following description are all directions shown in the figures and do not limit the specific structure of the present disclosure. In the description of the present disclosure, it should also be noted that, unless otherwise clearly specified and limited, the terms "mount", "interconnect", and "connect" should be understood in a broad sense. For example, it can be a fixed connection, a detachable connection, or an integral connection. It can be directly connected or indirectly connected through an intermediate medium. For those of ordinary skill in the art, the specific meanings of the above terms in the present disclosure can be understood according to specific situations.

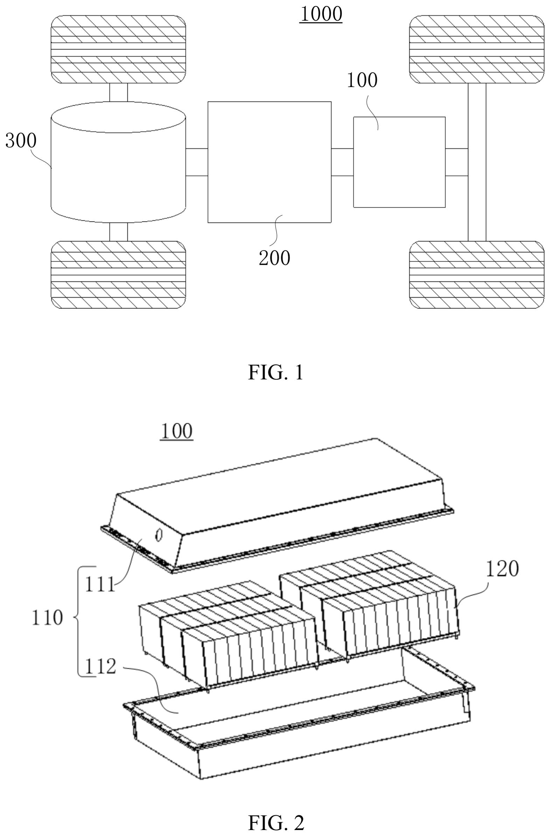

FIG. 1 shows a schematic structural diagram of an electrical device using a battery as a power source. As shown in FIG. 1, the electrical device of this embodiment includes a vehicle 1000, and the vehicle 1000 may be a battery electric vehicle, a hybrid electric vehicle, an extended-range vehicle, or the like. The interior of the vehicle 1000 is provided with a battery pack 100, and the battery pack 100 may be provided at the bottom, head, or tail of the vehicle 1000. The battery pack 100 may be used for power supply of the vehicle 1000. For example, the battery pack 100 may serve as an operating power source of the vehicle 1000. The vehicle 1000 may further include a controller 200 and a motor 300, and the controller 200 is used to control the battery pack 100 to supply power to the motor 300, for example, for the working power requirements during startup, navigation, and driving of the vehicle 1000.

The electrical device may be a mobile phone, a portable device, a laptop computer, an electric scooter, an electric vehicle, a ship, a spacecraft, an electric toy, an electric tool, and the like. For example, spacecraft includes airplanes, rockets, space shuttles, spaceships, and the like. Electric toys include stationary or mobile electric toys, for example, game consoles, electric car toys, electric ship toys, electric airplane toys, and the like. Electric tools include metal cutting electric tools, grinding electric tools, assembly electric tools, and railway electric tools, for example, electric drills, electric grinders, electric wrenches, electric screwdrivers, electric hammers, impact drills, concrete vibrators, and electric planers.

In some embodiments of the present disclosure, the battery pack 100 can not only serve as an operating power source of the vehicle 1000 but also as a driving power source of the vehicle 1000, replacing or partially replacing fuel or natural gas to provide driving power for the vehicle 1000.

Referring to FIG. 2, FIG. 2 is an exploded view of a battery pack 100 provided in some embodiments of the present disclosure. The battery pack 100 includes a box 110 and battery modules 120 provided in the box 110. The battery module 120 includes a plurality of battery cells, and the battery cells are accommodated in the box 110. The box 110 is used to provide an accommodation space for the battery cells, and the box 110 may adopt various structures. In some embodiments, the box 110 may include a first portion 111 and a second portion 112, and the first portion 111 and the second portion 112 fit each other. The first portion 111 and the second portion 112 jointly define an accommodation space for accommodating the battery cells. The second portion 112 may be a hollow structure with one end open, the first portion 111 may be a plate-shaped structure, and the first portion 111 covers the open side of the second portion 112 so that the first portion 111 and the second portion 112 jointly define the accommodation space. The first portion 111 and the second portion 112 may alternatively both be hollow structures with one side open, and the open side of the first portion 111 covers the open side of the second portion 112. Certainly, the box 110 formed by the first portion 111 and the second portion 112 may have various shapes, such as a cylinder, a cuboid, or the like.

In the battery pack 100, there may be a plurality of battery cells, and the electrode terminals of two battery cells are connected by conductive connectors to achieve series or parallel connection of the two battery cells. A plurality of battery cells may be connected in series or parallel or in a mixed manner. The mixed manner means that there are both series and parallel connections among the plurality of battery cells. A plurality of battery cells may be directly connected in series or parallel or in a mixed manner, and then the whole composed of the plurality of battery cells is accommodated in the box 110. Certainly, the battery pack 100 may alternatively be in the form of a plurality of battery cells first being connected in series or parallel or in a mixed manner to form battery modules 120, and then a plurality of battery modules 120 being connected in series or parallel or in a mixed manner to form a whole and accommodated in the box 110. The battery pack 100 may further include other structures. For example, the battery pack 100 may further include bus components for achieving electrical connection among the plurality of battery cells.

Each battery cell may be a secondary battery or a primary battery, or may be a lithium-sulfur battery, a sodium-ion battery, or a magnesium-ion battery, but is not limited thereto. The battery cell may be in the shape of a cylinder, a flat body, a cuboid, or other shapes.

In the process of heating the battery module to cure the colloid inside it, the stability of the heating temperature and the uniformity of positions of the heating devices affect the quality of glue curing in the battery module. Further, the heating control scheme for the target temperature and target time of the heating device is also a very important aspect to ensure the curing area and quality of the module glue.

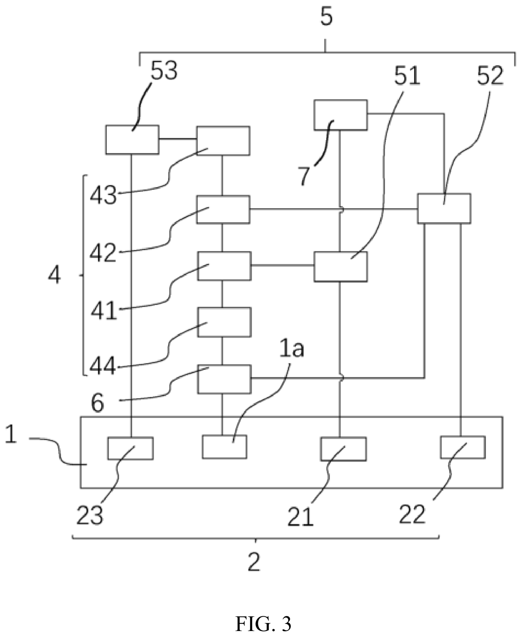

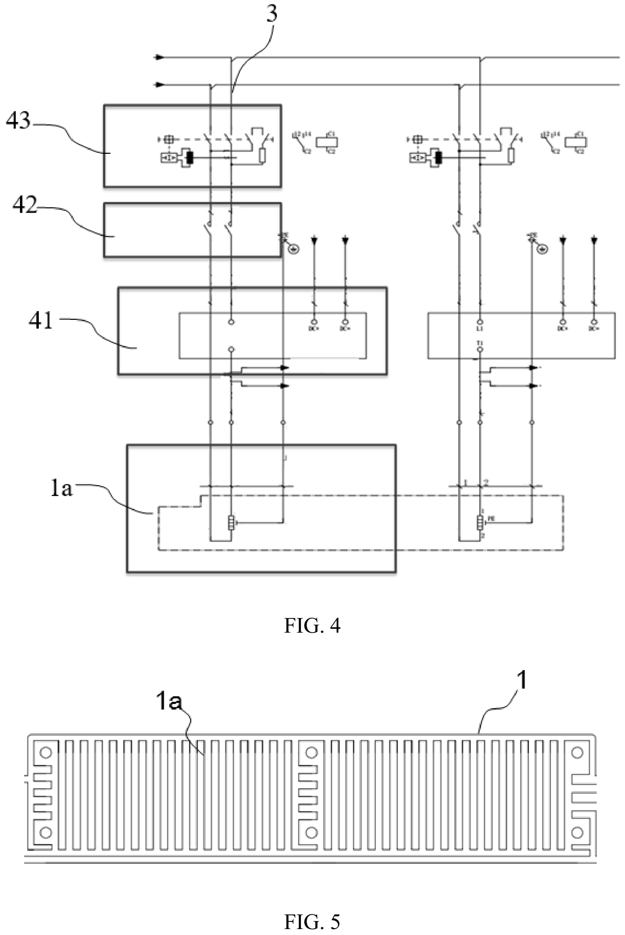

In order to improve the stability of the temperature in heating a battery module, this embodiment provides a heating system for a battery module. As shown in FIGs. 3 and 4, the heating system for the battery module includes a heating device 1, a temperature detection portion 2, a circuit control component 4, and a temperature control device 5.

The heating device 1 is configured to heat the battery module. The temperature detection portion 2 includes a first temperature detection component 21 configured to detect a temperature of the heating device 1. The circuit control component 4 includes a power adjustment device 41 that is provided in a power supply circuit 3 electrically connected to the heating component 1 and that adjusts a heating power of the heating device 1.

The temperature control device 5 is signal-connected to both the first temperature detection component 21 and the power adjustment device 41 and configured to: based on a difference between the temperature detected by the first temperature detection component 21 and a predetermined temperature, adjust the heating power of the heating device 1 through the circuit control component 4 to adjust the temperature of the heating device 1 toward the predetermined temperature.

In this embodiment, the temperature control device is used to adjust the heating power of the heating device 1 based on the difference between the temperature of the heating device 1 detected by the first temperature detection component 21 and the predetermined temperature, which is beneficial to improving the stability and accuracy of the temperature of the heating device 1, thereby ensuring the stability of the heating temperature of the battery module to improve the quality of glue curing in the battery module.

In some embodiments, the first temperature detection component 21 includes a thermocouple. In some embodiments, the thermocouple is a K-type thermocouple.

In some embodiments, the temperature detection portion 2 further includes a second temperature detection component 22 that detects a temperature at a different position of the heating device 1 from the first temperature detection component 21. The circuit control component 4 further includes a first switch component 42 provided in the power supply circuit 3 and connected in series with the power adjustment device 41 and the heating device 1.

The temperature control device 5 is signal-connected to both the second temperature detection component 22 and the first switch component 42 and configured to: in response to a difference between the temperatures detected by the first temperature detection component 21 and the second temperature detection component 22 being greater than a predetermined difference, control the first switch component 42 to cut off the power supply circuit 3.

The temperature control device 5 cuts off the power supply circuit 3 when the temperature difference at different positions of the heating device 1 is greater than a predetermined temperature difference, to prevent the temperature difference at different positions of the heating device 1 from being too large and affecting the consistency of the curing degree of the glue at different positions of the battery module, which is beneficial to ensuring the uniformity of the temperatures at the positions of the heating device 1. This is beneficial to improving the uniformity of glue curing in the battery module.

In some embodiments, the second temperature detection component 22 includes a thermocouple. In some embodiments, the thermocouple is a K-type thermocouple.

In some embodiments, the first switch component 42 includes a relay. In some embodiments, the relay as the first switch component 42 includes a power relay.

In some embodiments, the temperature control device 5 includes a first temperature controller 51 and a second temperature controller 52.

The first temperature controller 51 is signal-connected to both the first temperature detection component 21 and the power adjustment device 41 and configured to adjust the heating power of the heating device 1 through the power adjustment component 41 based on a difference between the temperature detected by the first temperature detection component 21 and the predetermined temperature.

The second temperature controller 52 is signal-connected to the second temperature detection component 22, the first switch component 42, and the first temperature controller 51, where the second temperature controller 52 is configured to: in response to the difference between the temperatures detected by the first temperature detection component 2 and the second temperature detection component 3 being greater than the predetermined difference, control the first switch component 42 to cut off the power supply circuit 3. The second temperature controller 52 controls the first switch component 42 to cut off the power supply circuit 3 when the temperature difference at different positions of the heating device 1 is greater than the predetermined temperature difference, forming a layer of protection for the heating device 1.

The power adjustment device 41 and the first switch component 42 are controlled by the first temperature controller 51 and the second temperature controller 52 respectively, which is beneficial to preventing any temperature controller from malfunctioning which causes the temperature of the heating device 1 to become uncontrollable, and therefore is beneficial to reducing the probability of accidental high temperature damaging the battery module.

In some embodiments, the first temperature controller 51 includes a PID controller. A control deviation is formed based on a difference between the predetermined temperature and an actual temperature of the heating device 1, and the deviation is linearly combined through proportion, integration, and differentiation to form a control quantity to control the heating power of the heating device 1, which is beneficial to improving the robustness and reliability of the control system.

In some embodiments, the power adjustment device 41 includes a second switch component, and the first temperature controller 51 controls the on-off of the second switch component by continuously detecting the temperature of the heating device 1 detected by the first temperature detection component 21, thereby controlling the power of the heating device 1 to maintain the temperature of the heating device 1 at the predetermined temperature. In some embodiments, the second switch component includes a solid-state relay.

In other embodiments, the power adjustment device 41 includes one of a voltage regulator and a frequency regulator.

In other embodiments, the temperature detection portion 2 further includes a third temperature detection component 23 that detects a temperature of the electric heating element 1a of the heating device 1. The circuit control component 4 includes a third switch component 43, where the third switch component 43 is provided in the power supply circuit 3 and connected in series with the heating device 1. The temperature control device 5 is signal-connected to both the third switch component 43 and the third temperature detection component 23 and configured to: in response to the temperature detected by the third temperature detection component 23 reaching a limit temperature, control the third switch component 43 to cut off the power supply circuit 3.

The third temperature detection component 23 directly detects the temperature of the electric heating element 1a, and when the temperature of the electric heating element 1a reaches a limit temperature, it is determined that the electric heating element 1a has an abnormal high temperature. The control device 5 controls the third switch component 43 to cut off the power supply circuit 3 to form another layer of protection for the heating device 1. Using the temperature of the electric heating element 1a detected by the third temperature detection component 23 as a reference benchmark for cutting off the power supply circuit 3 is beneficial to controlling the temperature of the heating device 1 in time and preventing the high temperature from being transmitted to the battery module outside the heating component 1 to cause damage to the battery module.

In some embodiments, the third temperature detection component 23 includes a thermocouple. In some embodiments, the thermocouple is a K-type thermocouple.

In some embodiments, the third switch component 43 includes a leakage protector.

As shown in FIG. 5, the heating device 1 includes a plate-shaped component and electric heating elements 1a uniformly arranged in the plate-shaped component, and the electric heating elements 1a are electrically connected to the power supply circuit 3. In some embodiments, the third temperature detection component 23 is embedded inside the plate-shaped component and adjacent to the electric heating element 1a to directly detect the temperature of the electric heating element 1a.

In some embodiments, the temperature control device includes a third temperature controller 53, and the third temperature controller 53 is signal-connected to both the third switch component 43 and the third temperature detection component 23 and configured to: in response to the temperature detected by the third temperature detection component 23 reaching the limit temperature, control the third switch component 43 to cut off the power supply circuit 3. Separately providing the third temperature controller for controlling the third switch component 43 is beneficial to preventing a failure in cutting off the temperature of the power supply circuit 3 in a case that other temperature controllers malfunction, thereby forming an independent protection measure.

In some embodiments, a fuse 44 is further provided in the power supply current 3 to prevent excessively large current in the power supply circuit 3. In some embodiments, the fuse includes a fast-blow switch.

In some embodiments, the third temperature controller 53 includes a temperature alarm module.

In some embodiments, the heating system further includes a current detection component 6 and a main control device 7. The current detection component 6 is provided in the power supply circuit 3 to detect a current in the power supply circuit 3. The main control device 7 is signal-connected to the current detection component 6, and the main control device 7 is configured to issue alarm information in response to the current detected by the current component 6 exceeding a predetermined range, to prevent accidents causing high temperature of the heating device 1.

The main control device 7 is signal-connected to both the first temperature controller 51 and the second temperature controller 52. In some embodiments, the current detection component 6 is signal-connected to the second temperature controller 52, and the second temperature controller 52 feeds back the current detected by the current detection component 6 to the main control device 7.

In some embodiments, the main control device includes a PLC.

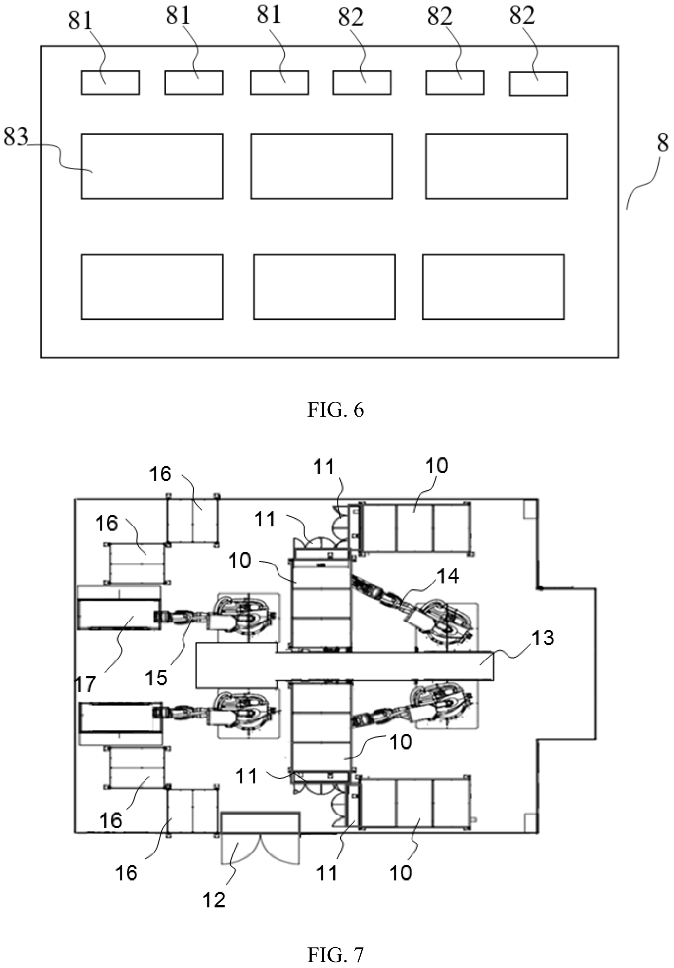

In some embodiments, the heating system for the battery module further includes a human-machine interaction device 8 signal-connected to the temperature control device 5. Referring to FIG. 6, the human-machine interaction device 8 is provided with a first input portion 81 for a user to input the predetermined temperature, so that the user can set the predetermined temperature according to different needs. The control device 5 is configured to adjust, by controlling the power adjustment device 41, the temperature of the heating device 1 to the predetermined temperature input by the user.

In some embodiments, the human-machine interaction device 8 is provided with a plurality of first input portions 81, the plurality of the first input portions 81 are configured for a user to input a plurality of predetermined temperatures from low to high, and the temperature control device 5 is configured to control the heating device 1 to sequentially heat to the predetermined temperatures input by the plurality of first input portions 81. The maximum predetermined temperature is the final target temperature, and the control device 5 gradually adjusts the temperature of the heating device 1 to the target temperature according to the plurality of predetermined temperatures for input. The heating system of this embodiment can allow the user to adjust the heating process of the heating device 1 according to actual needs to meet the requirements of different types of battery modules.

In some embodiments, the human-machine interaction device 8 includes a plurality of second input portions 82 provided in one-to-one correspondence with the first input portions 81, the second input portion 82 is configured for a user to input a predetermined time for maintaining the predetermined temperature input by the corresponding first input portion 81, and the temperature control device 5 is configured to control the heating device 1 to maintain the corresponding predetermined time at the predetermined temperature.

In some embodiments, the human-machine interaction device 8 further includes a third input portion 83 for inputting a temperature compensation parameter.

The control device 5 controls, through PID adjustment, the heating device 1 to be sequentially heated to the predetermined temperatures input in the plurality of first input portions 81 and has each predetermined temperature maintained for a predetermined time, improving the diversity of functions of the heating system.

In some embodiments, the human-machine interaction device 8 includes a touch screen.

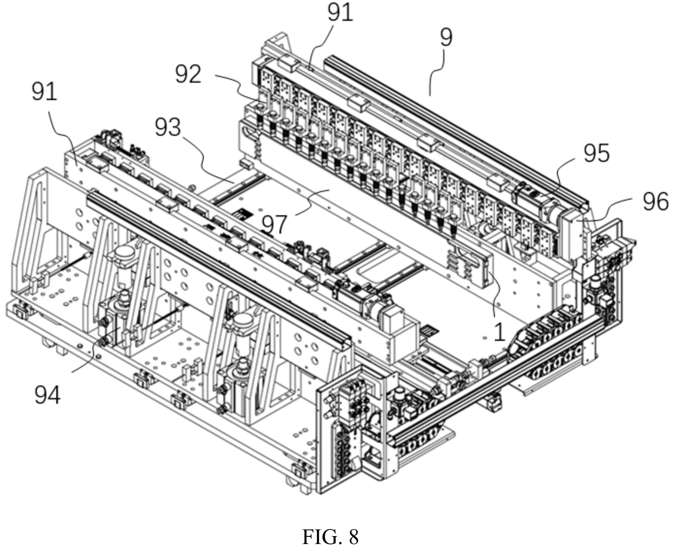

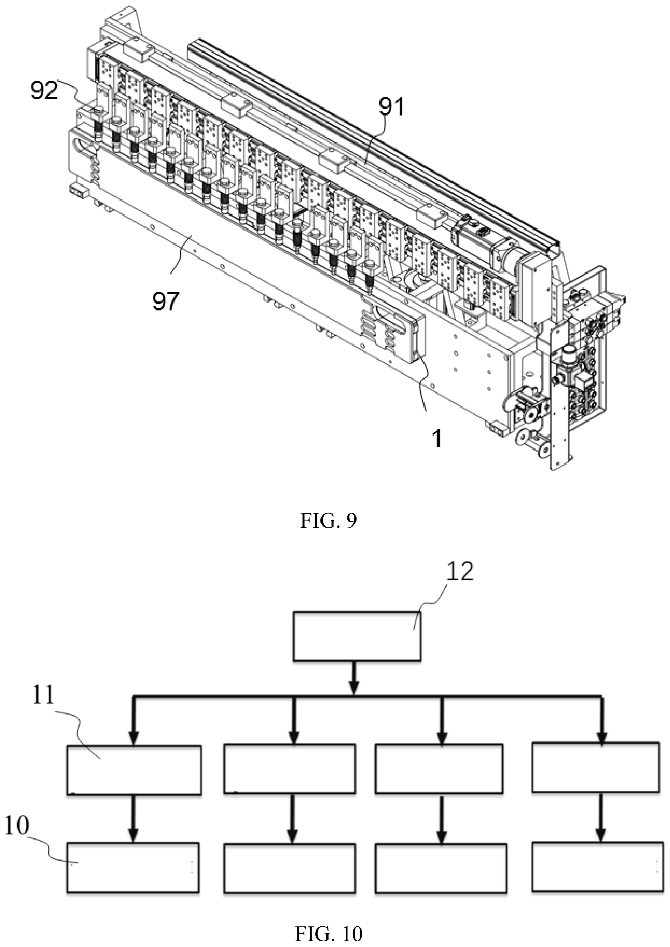

The embodiments further provide heating equipment for a battery module, and the heating equipment includes a placement device 9 and the heating system for the battery module described above. The placement device 9 is configured to carry the battery module. The heating device 1 of the heating system for the battery module is mounted on the placement device 9, referring to FIGs. 8 and 9.

The placement device 9 includes two clamping components 91 spaced apart, and the heating device 1 is provided on an inner surface of the clamping component 91 facing towards the battery module. Two opposite side surfaces of the battery module face towards the two clamping components 91 respectively. The heating device 1 is plate-shaped as a whole. The two clamping components 91 can move relative to each other to clamp the battery module therebetween.

The placement device 9 further includes a base 93, and at least one clamping component 91 is movably mounted on the base 93 to clamp the battery module between the two clamping components 91. The placement device 9 further includes a first drive portion 94 for driving the clamping component 91 to move relative to the base. In some embodiments, the first drive portion 94 includes a cylinder or a hydraulic cylinder.

The placement device 9 further includes a pressing component 92 that presses a pole of the battery module. In some embodiments, the placement device 9 further includes a second drive portion 95 that drives the pressing component 92 to press the pole of the battery module and a transmission mechanism 96 in transmission connection to the second drive portion 95. In some embodiments, the transmission mechanism 96 includes a lead screw and a slider in threaded fit with the lead screw.

A plate-shaped component of the heating device 1 is made of a heat-conductive material, and in some embodiments, the material of the plate-shaped component is aluminum. A silicone pad 97 is provided on the surface of an adjacent battery module of the heating device 1 to prevent scalding the battery module.

In some embodiments, the flatness of the heating device is <0.2 mm to ensure sufficient contact with the battery module and improve the uniformity of heating the battery module. The parallelism of the heating devices 1 provided on the two clamping components 91 respectively is <0.4 mm to ensure sufficient contact of the two heating devices 1 with the two opposite side surfaces of the battery module respectively.

In some embodiments, the placement device 9 further includes a bottom surface for carrying the battery module, and the flatness of the bottom surface is <0.1 mm.

The heating device 1 is perpendicular to the bottom surface of the placement device 9, and the perpendicularity between the heating device 1 and the bottom surface is 0.15 mm.

As shown in FIGs. 7 and 10, the heating equipment for the battery module includes a plurality of heating chambers 10, a plurality of sub-distribution cabinets 11, and a main distribution cabinet 12. In some embodiments, the heating chambers 10 are provided with multiple layers of placement devices 9 arranged sequentially in the vertical direction, and each layer of placement devices 9 includes multiple placement devices 9 arranged side by side.

Each heating chamber 10 includes at least one placement device 9. The plurality of sub-distribution cabinets 11 are provided in one-to-one correspondence with the plurality of heating chambers 10, where the sub-distribution cabinet 11 is provided with the temperature control device 5, and the temperature control device 5 is configured to control the temperature of the heating device 1 in the corresponding heating chamber 10. The main distribution cabinet 12 is provided with the main control device 7, where the main control device 7 is signal-connected to the temperature control devices 5 in the plurality of sub-distribution cabinets 11.

As shown in FIG. 7, the heating equipment for the battery module further includes a conveyor line 13 and a first robot 14 provided on one side of the conveyor line, and the heating chambers 10 are provided on one side of the conveyor line 13. In some embodiments, the first robot 14 is configured to transport the battery module on the conveyor line 13 to the heating chamber 10 for heating and/or being transported the heated battery module in the heating chamber 10 to the conveyor line 13. The conveyor line 13 transports the heated battery module downstream.

A standing chamber 16 and a second robot 15 are further provided downstream of the heating chambers 10 along the movement direction of the conveyor line 13. The second robot 15 is configured to transport, to the standing chamber 16, the heated battery module requiring standing conveyed by the conveyor line 13. If the heated battery module does not require standing, the second robot transports it to a turnover platform 17.

Distribution cabinets of the heating system achieve modular and distributed control. The main control device 7 monitors the control device 5 in each sub-distribution cabinet and exchanges data with the control device 5, and the temperature control device 5 in the sub-distribution cabinet 11 controls the heating device 1 in the corresponding heating chamber.

This embodiment also provides a heating method for a battery module, and the heating includes:
acquiring temperature information of the heating device 1 for heating the battery module; and
based on a difference between a temperature of the heating device 1 and a predetermined temperature, issuing a command to adjust a heating power of the heating device 1 to adjust the temperature of the heating device 1 toward the predetermined temperature.

Adjusting the heating power of the heating device 1 based on the difference between the temperature of the heating device 1 and the predetermined temperature is beneficial to improving the stability of the temperature of the heating device 1, thereby ensuring the stability of the battery module to improve the quality of glue curing in the battery module.

The heating method further includes:
acquiring a temperature of a first position of the heating device 1 and temperature information of a second position different from the first position; and
in response to a difference between the temperature of the first position and the temperature of the second position being greater than a predetermined difference, issuing a command to cut off a power supply circuit 3 that supplies electric energy to the heating device 1.

Cutting off the power supply circuit 3 when the temperature difference at different positions of the heating device 1 is greater than the predetermined temperature difference prevents the temperature difference at different positions of the heating device 1 from being too large and thus affecting the curing degree of the glue at different positions of the battery module. This is beneficial to ensuring the uniformity of the temperatures at the positions of the heating device, and therefore beneficial to improving the uniformity of glue curing in the battery module.

The heating method further includes:
acquiring temperature information of an electric heating element 1a of the heating device 1; and
in response to the temperature of the electric heating element 1a being greater than a limit temperature, issuing a command to cut off a power supply circuit 3 that supplies electric energy to the heating device 1.

When the temperature of the electric heating element 1a reaches the limit temperature, it is determined that the electric heating element 1a has an abnormal high temperature, and then the power supply circuit 3 is cut off to form another layer of protection for the heating device 1. Using the temperature of the electric heating element 1a as a reference benchmark for cutting off the power supply circuit 3 is beneficial to controlling the temperature of the heating device 1 in time and preventing the high temperature from being transmitted to the battery module outside the heating component 1 to cause damage to the battery module.

The heating method further includes:
acquiring a plurality of predetermined temperatures from low to high input by a user; and
issuing a command to adjust the heating power of the heating device 1 to sequentially heat the temperature of the heating device 1 to the plurality of predetermined temperatures, where a maximum of the predetermined temperatures is a target temperature.

The heating method further includes:
acquiring a plurality of predetermined times input by a user and corresponding to the plurality of predetermined temperatures; and
issuing a command to adjust the heating power of the heating device 1 to maintain the heating device 1 at the corresponding predetermined temperature for the predetermined time.

In the embodiments, the heating process is controlled based on the set heating process information, and the user adjusts the heating process of the heating device 1 according to actual needs to meet the requirements of different types of battery modules.

In this embodiment, a control deviation is formed based on a difference between the predetermined temperature and an actual temperature of the heating device 1, and the deviation is linearly combined through proportion, integration, and differentiation to form a control quantity to control the heating power of the heating device 1, which is beneficial to improving the robustness and reliability of the control system.

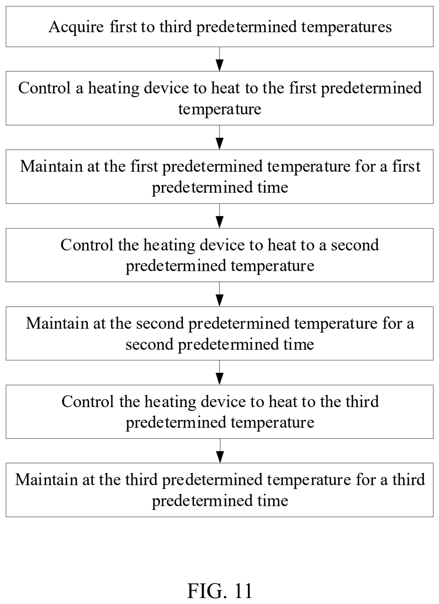

Referring to FIG. 11, the heating process of the battery module is: after the battery module is transported into the heating chamber 10, the clamping components 91 clamp the battery module, and then the control device 5 heats the heating device 1 to a first predetermined temperature according to a user setting, and maintains the heating device 1 at the first predetermined temperature for a first predetermined time based on PID control. Then the control device 5 heats the heating device 1 to a second predetermined temperature according to a user setting and maintains the heating device 1 at the second predetermined temperature for a second predetermined time based on PID control. Thereafter, the control device 5 heats the heating device 1 to a third predetermined temperature according to a user setting and maintains the heating device 1 at the third predetermined temperature for a third predetermined time based on PID control.

It can be learned from the above that the heating equipment and its heating method in the embodiments can achieve high-precision precise control of temperatures through PID control, double safety control of the temperature of the heating device 1 through the first switch component 42 and the third switch component 43, and high compatibility by allowing the user to set the heating process.

Although the present disclosure has been described with reference to preferred embodiments, various improvements can be made thereto and components therein can be replaced with equivalents without departing from the scope of the present disclosure. In particular, as long as there is no structural conflict, the technical features mentioned in the various embodiments can be combined in any manner. The present disclosure is not limited to the specific embodiments disclosed herein, but includes all technical solutions falling within the scope of the claims.

## Claims

1. A heating system for a battery module, comprising:
a heating device (1) configured to heat the battery module;
a temperature detection portion (2) comprising a first temperature detection component (21) configured to detect a temperature of the heating device (1);
a circuit control component (4) comprising a power adjustment device (41) that is provided in a power supply circuit (3) electrically connected to the heating component (1) and that adjusts a heating power of the heating device (1); and
a temperature control device (5) signal-connected to both the first temperature detection component (21) and the power adjustment device (41) and configured to:
based on a difference between the temperature detected by the first temperature detection component (21) and a predetermined temperature, adjust the heating power of the heating device (1) through the circuit control component (4) to adjust the temperature of the heating device (1) toward the predetermined temperature.

2. The heating system for the battery module according to claim 1, wherein
the temperature detection portion (2) further comprises a second temperature detection component (22) that detects a temperature at a different position of the heating device (1) from the first temperature detection component (21);
the circuit control component (4) further comprises a first switch component (42) provided in the power supply circuit (3) and connected in series with the power adjustment device (41) and the heating device (1); and
the temperature control device (5) is signal-connected to both the second temperature detection component (22) and the first switch component (42) and configured to: in response to a difference between the temperatures detected by the first temperature detection component (21) and the second temperature detection component (22) being greater than a predetermined difference, control the first switch component (42) to cut off the power supply circuit (3).

3. The heating system for the battery module according to claim 2, wherein the temperature control device (5) comprises:
a first temperature controller (51) signal-connected to both the first temperature detection component (21) and the power adjustment device (41) and configured to adjust the heating power of the heating device (1) through the power adjustment component (41) based on a difference between the temperature detected by the first temperature detection component (21) and the predetermined temperature; and
a second temperature controller (52) signal-connected to the second temperature detection component (22), the first switch component (42), and the first temperature controller (51), wherein the second temperature controller (52) is configured to: in response to the difference between the temperatures detected by the first temperature detection component (2) and the second temperature detection component (3) being greater than the predetermined difference, control the second switch component (42) to cut off the power supply circuit (3).

4. The heating system for the battery module according to claim 3, wherein the first temperature controller (51) comprises a PID controller.

5. The heating system for the battery module according to any one of claims 1 or 4, wherein the power adjustment device (41) comprises one of a second switch component, a voltage regulator, and a frequency regulator.

6. The heating system for the battery module according to any one of claims 1 to 5, wherein
the temperature detection portion (2) further comprises a third temperature detection component (23) that detects a temperature of an electric heating element (1a) of the heating device (1);
the circuit control component (4) comprises a third switch component (43), wherein the third switch component (43) is provided in the power supply circuit (3) and connected in series with the heating device (1); and
the temperature control device (5) is signal-connected to both the third switch component (43) and the third temperature detection component (23) and configured to: in response to the temperature detected by the third temperature detection component (23) reaching a limit temperature, control the third switch component (43) to cut off the power supply circuit (3).

7. The heating system for the battery module according to claim 6, wherein the temperature control device comprises a third temperature controller (53), and the third temperature controller (53) is signal-connected to both the third switch component (43) and the third temperature detection component (23) and configured to: in response to the temperature detected by the third temperature detection component (23) reaching the limit temperature, control the third switch component (43) to cut off the power supply circuit (3).

8. The heating system for the battery module according to any one of claims 1 to 7, further comprising:
a current detection component (6) provided in the power supply circuit (3) to detect a current in the power supply circuit (3); and
a main control device (7), wherein the current detection component (6) is signal-connected to the main control device (7), and the main control device (7) is configured to issue alarm information in response to the current detected by the current component (6) exceeding a predetermined range.

9. The heating system for the battery module according to any one of claims 3 to 7, further comprising a main control device (7), wherein the main control device (7) is signal-connected to both the first temperature controller (51) and the second temperature controller (52).

10. The heating system for the battery module according to any one of claims 1 to 9, further comprising a human-machine interaction device (7) signal-connected to the temperature control device (5), wherein the human-machine interaction device (8) is provided with a first input portion (81) for a user to input the predetermined temperature.

11. The heating system for the battery module according to claim 10, wherein the human-machine interaction device (8) is provided with a plurality of the first input portions (81), the plurality of the first input portions (81) are configured for a user to input a plurality of predetermined temperatures from low to high, and the temperature control device (5) is configured to control the heating device (1) to sequentially heat to the predetermined temperatures input by the plurality of the first input portions (81).

12. The heating system for the battery module according to claim 11, wherein the human-machine interaction device (8) comprises a plurality of second input portions (82) provided in one-to-one correspondence with the first input portions (81), the second input portion (82) is configured for a user to input a predetermined time for maintaining the predetermined temperature input by the corresponding first input portion (81), and the temperature control device (5) is configured to control the heating device (1) to maintain the corresponding predetermined time at the predetermined temperature.

13. The heating system for the battery module according to any one of claims 1 to 12, wherein the heating device (1) comprises a plate-shaped component and electric heating elements (1a) uniformly arranged in the plate-shaped component, and the electric heating elements (1a) are electrically connected to the power supply circuit (3).

14. Heating equipment for a battery module, comprising:
a placement device (9) configured to carry the battery module; and
the heating system for the battery module according to any one of claims 1 to 13, wherein the heating device (1) is mounted on the placement device (9).

15. The heating equipment for the battery module according to claim 14, wherein the placement device (9) comprises two clamping components (91) spaced apart, and the heating device (1) is provided on the clamping components (91).

16. The heating equipment for the battery module according to claim 14 or 15, comprising:
a plurality of heating chambers (10), wherein each of the heating chambers (10) comprises at least one placement device (9);
a plurality of sub-distribution cabinets (11) provided in one-to-one correspondence with the plurality of heating chambers (10), wherein the sub-distribution cabinet (11) is provided with the temperature control device (5), and the temperature control device (5) is configured to control the temperature of the heating device (1) in the corresponding heating chamber (10); and
a main distribution cabinet (12) provided with a main control device (7), wherein the main control device (7) is signal-connected to the temperature control devices (5) in the plurality of sub-distribution cabinets (11).

17. A heating method for a battery module, comprising:
acquiring temperature information of a heating device (1) for heating the battery module; and
based on a difference between a temperature of the heating device (1) and a predetermined temperature, issuing a command to adjust a heating power of the heating device (1) to adjust the temperature of the heating device (1) toward the predetermined temperature.

18. The heating method according to claim 17, further comprising:
acquiring a temperature of a first position of the heating device (1) and temperature information of a second position different from the first position, and
in response to a difference between the temperature of the first position and the temperature of the second position being greater than a predetermined difference, issuing a command to cut off a power supply circuit (3) that supplies electric energy to the heating device (1).

19. The heating method according to claim 17 or 18, further comprising:
acquiring temperature information of an electric heating element (1a) of the heating device (1); and
in response to the temperature of the electric heating element (1a) being greater than a limit temperature, issuing a command to cut off a power supply circuit (3) that supplies electric energy to the heating device (1).

20. The heating method according to any one of claims 17 to 19, further comprising:
acquiring a plurality of predetermined temperatures from low to high input by a user; and
issuing a command to adjust the heating power of the heating device (1) to sequentially heat the temperature of the heating device (1) to the plurality of predetermined temperatures, wherein a maximum of the predetermined temperatures is a target temperature.

21. The heating method according to claim 20, further comprising:
acquiring a plurality of predetermined times input by a user and corresponding to the plurality of predetermined temperatures respectively; and
issuing a command to adjust the heating power of the heating device (1) to maintain the heating device (1) at the corresponding predetermined temperature for the predetermined time.

22. The heating method according to any one of claims 17 to 21, wherein a control deviation is formed based on a difference between the predetermined temperature and an actual temperature of the heating device 1, and the deviation is linearly combined through proportion, integration, and differentiation to form a control quantity to control the heating power of the heating device (1).
